# EUROPÄISCHE PATENTSCHRIFT

(11) **EP 3 422 995 B1**
(45) Veröffentlichungstag und Bekanntmachung des Hinweises auf die Patenterteilung: **29.01.2020**
(21) Anmeldenummer: 17721325.3
(22) Anmeldetag: 12.04.2017
(51) Int. Cl.: A61C 11/08

(54) **MONTAGESOCKEL FÜR EINEN ARTIKULATOR, ARTIKULATORVORRICHTUNG UND VERFAHREN ZUR HERSTELLUNG EINES GIPSMODELLS MIT DEM ARTIKULATOR**
MOUNTING BASE FOR AN ARTICULATOR, ARTICULATOR DEVICE AND METHOD FOR PRODUCING A PLASTER MODEL WITH THE ARTICULAR
SOCLE DE MONTAGE POUR UN ARTICULATEUR, DISPOSITIF D'ARTICULATEUR ET PROCÉDÉ POUR FABRIQUER UN MODÈLE EN PLÂTRE AVEC L'ARTICULATEUR

(30) Priorität: 18.04.2016 DE 102016004492
(43) Veröffentlichungstag der Anmeldung: 09.01.2019
(73) Patentinhaber: IML-Instrumenta Mechanik Labor GmbH, 69168 Wiesloch (DE)
(72) Erfinder: HUNGER, Erich, 76133 Karlsruhe (DE); HUNGER, Sebastian, 69181 Leimen (DE); HUNGER, Fabian, 69181 Leimen (DE)
(74) Vertreter: Drobnik, Stefanie
(86) Internationale Anmeldenummer: PCT/EP2017/000475
(87) Internationale Veröffentlichungsnummer: WO 2017/182116

(56) Entgegenhaltungen:
- JP-A- 2003 093 409
- US-A1- 2001 051 324

## Beschreibung

Die Erfindung betrifft einen Montagesockel für einen Artikulator in der Zahnmedizintechnik, eine Artikulatorvorrichtung und ein Verfahren zum Herstellen von Gebissmodellen mit dem Artikulator.

Artikulatoren sind Geräte zur Simulation der Kiefergelenkbewegung. Gipsmodelle von Ober- und Unterkieferzahnreihen werden in Okklusion in das Gerät montiert. Mit einem sogenannten Mittel- oder Vollwertartikulator können die individuellen Kiefergelenkbewegungen simuliert werden, was für die Fertigung von Aufbissschienen und hochwertigem Zahnersatz etwa nötig ist. Dabei werden Gebissmodelle, meist aus Gips, der Ober- und Unterkiefer in den Artikulator eingesetzt. Die weitere Eingipsung der Gebissmodelle wird erzeugt, indem diese nach Vermessung des Kiefers in entsprechende Position gebracht und eingegipst werden. Die eingegipsten Gebissmodelle können im Artikulator so zueinander bewegt werden, dass die Kaubewegungen des Kiefers simuliert werden und die Formgebung des Zahnersatzes überprüft werden kann. Beispielsweise beschreibt die DE 93 06 606 U1 einen solchen Artikulator.

Der Schritt des Eingipsens der Gebissmodelle wird häufig nicht im gleichen Artikulator vorgenommen wie die anschließende Überprüfung des Zahnersatzes. Daher ist erforderlich, dass die Gebissmodelle aus einem Artikulator entnommen und wieder in diesen oder einen anderen eingesetzt werden können und zudem, dass die Artikulatoren so aufgebaut sind, dass sich die Modelle jeweils in der gleichen Lage zueinander, in Okklusion, aber auch zu den Bewegungsachsen befinden. Um dies zu erreichen, werden die Gebissmodelle beim Eingipsen über einen Gipssockel mit einer sogenannten Retentions-oder Montageplatte verbunden. Dabei wird immer der gesamte Raum zwischen den Gipsmodellen und der Retentions- bzw. Montageplatte mit Gips gefüllt. Diese Retentions-oder Montageplatten können mit dem Artikulator verbunden werden.

Aus dem Stand der Technik sind verschiedene Ausführungsformen von Montageplatten bekannt. So gibt es nach DE 42 06 835 Montageplatten, die in der Montageseite, mit der sie am Artikulator anliegen, ein Innengewinde aufweisen, über das eine Fixierung am Artikulator mittels einer Fixierschraube möglich ist. Diese Montageplatten verbleiben so lange am Gipsmodell wie ein erneutes Einsetzen im Artikulator vorgenommen wird.

Die DE 20 2013 009 054 U1 beschreibt ein Beispiel einer zweiteiligen Montagevorrichtung für einen Artikulator, die eine sichere Haftung des Gipses an der Retentionsplatte gewährleistet. Dort besteht die zweiteilige Montagevorrichtung aus einer Montageplatte, die auf der einen Seite am Artikulator fixiert wird und auf der anderen Seite ein magnetisches Halteelement aufweist, und dem Gegenstück, einer Retentionsplatte. Dabei verbleiben die Montageplatten fest im Artikulator. Die Retentionsplatte enthält einen ferromagnetischen Körper und wird fest mit dem Gipssockel verbunden. So kann das fertige Modell über die Magnetkraft fixiert werden.

Aus DE 29 22 045 A1 ist eine Vorrichtung zum Befestigen und Justieren von Gipsabgüssen von Ober- und Unterkiefer für die Herstellung von Zahnprothetik bekannt, die eine dem Grundriss von Ober- bzw. Unterkiefer grob angepasste Kunststoffschale verwendet. Hierbei sind in der Schale für die Haftvermittlung des Gipsabgusses Anformungen in Form von Rippen, die vom Boden hochstehen, angeordnet. Ferner sind für eine druccknopfartige Befestigung des Montagesockels am Artikulator eine mit einer Hinterschneidung versehene Vertiefung an der Außenseite des Bodens und mindestens eine Justierhöhlung für eine reproduzierbare Positionierung des Montagesockels an einem Artikulator vorgesehen.

Eine Anordnung zur Justierung unterschiedlicher Artikulatoren mit Bezug auf einen Inzisalstift offenbart DE 90 03 634 U1. Dazu wird ein höhenverstellbares Zentriergerät mit einer Führungseinrichtung eingesetzt, durch die der Abstand zum Inzisalstift fixiert ist. Das Zentriergerät wird in einen Artikulator zwischen die beiden Primär- bzw. Montagesockel eingesetzt, die beide zunächst locker befestigt werden, ehe mit dem Zentriergerät die Justierung erfolgt, woraufhin die Montagesockel am jeweiligen Artikulatorarm festgelegt werden.

DE 90 03 633 U1 offenbart einen Primär- bzw. Montagesockel für einen Artikulator, bei dem die Haltefläche des Sockelkörpers durch ein permanentmagnetisches Halteelement gebildet wird, das eine Durchgangsöffnung für ein konusförmiges Element aufweist, das in das Gipsmodell eingegossen ist. Das konusförmige Element ist in der Durchgangsöffnung beweglich eingebracht und steht mit einer Stellschraube in Wirkverbindung, die zwischen die Montagefläche und die Haltefläche des Sockelkörpers eingesetzt ist. Diese Schraube kann zur Ausführung einer Hebe- und Absenkbewegung des konusförmigen Elements und damit des Gipsmodells betätigt und in verschiedenen Positionen angeordnet werden. Zum Wiederaufsetzen des Gipsmodells auf den Montagesockel wird das konusförmige Element in die Durchgangsöffnung eingeführt und kommt dort mit der Schraube in Wirkverbindung, sodass das Gipsmodell langsam durch Zurückverschieben des Hebeelements auf den Montagesockel aufgesetzt werden kann.

JP0393409A offenbart einen Montagesockel für einen Artikulator mit einer Montagefläche und einer Haltefläche, sowie einem unterhalb der Montagefläche vorgesehenen Hebeelement.

Ausgehend von diesem Stand der Technik ist es Aufgabe der vorliegenden Erfindung, ein verbessertes Montageelement bereitzustellen, das eine Erstellung von retentionsplattenfreien Gipsmodellen ermöglicht und sowohl im Artikulator ausgerichtet werden kann, als auch entsprechende Gipsmodelle in verschiedenartigen Artikulatoren derart fixiert, dass es wiederholtes Einbringen in möglichst exakt gleicher Position erlaubt. Diese Aufgabe wird durch einen Montagesockel mit den Merkmalen des Anspruchs 1 gelöst.
Die weitere Aufgabe, eine verbesserte Artikulatorvorrichtung für die Zahnmedizintechnik bereitzustellen, die erleichtertes Handhaben von Gebissmodellen ermöglicht, wird durch eine Artikulatorvorrichtung nach Anspruch 7 gelöst.
Eine verbesserte Handhabung bei der Nutzung von Artikulatoren wird durch das Verfahren mit den Merkmalen des unabhängigen Anspruchs 9 gelöst.
Weiterbildungen der Vorrichtungen und des Verfahrens sind in den entsprechenden Unteransprüchen ausgeführt.
Eine erste Ausführungsform eines erfindungsgemäßen Montagesockels für einen Artikulator in der Zahnmedizintechnik zur Erstellung und Handhabung von retentionsplattenfreien Gipsmodellen weist eine in einem Montagezustand dem Artikulator zugewandte Montagefläche und eine von diesem abgewandte Haltefläche auf. In die Haltefläche ist zumindest ein permanentmagnetisches Halteelement eingebracht. Darüber hinaus liegt eine Ausnehmung in der Haltefläche des Montagesockels vor, der ein Abdrückelement aufweist, das in die Ausnehmung in der Haltefläche beweglich eingebracht ist. Es können auch zwei oder mehr Ausnehmungen vorliegen, in die jeweils ein Abdrückelement, oder in die jeweils Teile einer oder mehrerer Abdrückelemente eingebracht sind. Dieses Abdrückelement lässt sich von außerhalb des Montagesockels anheben und absenken, der hierzu zumindest ein Hebeelement aufweist. Dieses Hebeelement sitzt zwischen der Montagefläche und der Haltefläche und steht in Wirkverbindung mit dem Abdrückelement.

Das Abdrückelement lässt sich damit zwischen zwei vorgegebenen Maximalpositionen bewegen. In der ersten Maximalposition ragt das Abdrückelement am weitesten, also vollständig, aus der Haltefläche heraus. In der zweiten Maximalposition ist das Abdrückelement in die Haltefläche zurückgezogen und stellt einen bündigen Abschluss mit dieser bereit.

Werden die Montagesockel in einen Artikulator eingebaut, so ist es möglich, die Gebissmodelle der Ober- und Unterkiefer einzugipsen, ohne dass zusätzliche Retentionsplatten benötigt werden. Der Gips wird dabei direkt auf die Haltefläche des Montagesockels aufgetragen, wobei ein ferromagnetischer Körper in den Gips eingearbeitet wird. Mit dem Abdrückelement kann nach dem Trocknen und Aushärten des Gipses das Gebissmodell problemlos vom Montagesockel gelöst werden. Bei einem erneuten Einsetzen des Gebissmodells hält dies durch die magnetische Anziehungskraft zwischen dem Halteelement des Montagesockels und dem ferromagnetischen Körper, der im Gips des Gebissmodells eingearbeitet ist.

Das Abdrückelement kann zwischen einem ausgefahrenen Zustand, der ersten Position und einem eingefahrenen Zustand, der zweiten Position, bewegt werden. Die Hin- und Herbewegung wird durch das Hebeelement ausgelöst. Das Hebeelement wird wiederum durch Betätigungsvorrichtung des Montagesockels von außerhalb betätigt. Das Abdrückelement wird für unterschiedliche Vorgänge in die einzelnen Positionen gebracht. Ein Vorgang ist das Eingipsen. Hierfür wird das Abdrückelement zu zwei Dritteln aus der Haltefläche herausgefahren. Es kann für das Eingipsen aber auch weiter oder weniger weit ausgefahren werden, nur die ganz ausgefahrene erste Position ist ungeeignet. Ein zweiter Vorgang ist das Versenken. In dieser Position ist das Abdrückelement in die Haltefläche zurückgezogen und schließt bündig mit dieser ab. Das Versenken wird genutzt, um nach dem Eingipsen das Abdrückelement aus dem Gips des Gebissmodells zu lösen. Auch beim erneuten Einsetzen eines Gebissmodells wird das Abdrückelement versenkt. Der dritte Vorgang ist das Auswerfen. Dabei wird das Abdrückelement ganz herausgefahren in die erste Position, in der das Abdrückelement am weitesten aus der Haltefläche herausragt, um das Gebissmodell von der Haltfläche weg zu drücken und so nach dem Eingipsen einfach abzulösen.

Das Abdrückelement kann ein Bolzen mit prismatischer Form sein, oder alternativ auch einen runden Querschnitt haben.

Das Hebeelement ist nach einer weiteren Ausführungsform eine Exzenterwelle mit einer Betätigungseinrichtung, über die die Drehung der Welle möglich ist. Diese Exzenterwelle kann im oder außerhalb des Sockelkörpers enden und entweder in ein Betätigungselement übergehen oder so geformt sein, dass ein Betätigungselement ansteckbar ist, so dass sich die Drehung über dieses Betätigungselement ausführen lässt.

In einer Variante ist die Haltefläche außenumfänglich durch eine Wandung begrenzt. Diese Wandung hat zumindest teilweise auf ihrer Richtung einer Mitte der Haltefläche weisenden Seite eine Anschrägung, die in Bezug auf eine Halteflächenebene einen Winkel α kleiner als 90° hat. Bevorzugt sind Winkel größer als 30° und kleiner als 60°. Das ist vorteilhaft, da im Montagezustand, in dem das Gipsmodell im Montagesockel im Artikulator sitzt, die Wandung das Gipsmodell in seiner Position hält, so dass es nicht parallel zur Haltefläche verrutschen kann. Hierfür ist eine Abstützung gegen eine Verschiebung erforderlich.

Die Anordnung der Wandung an der Innenseite ist besonders vorteilhaft, weil sich das Gipsmodell leichter aus der Form lösen und wieder einsetzen lässt, außerdem wird hierdurch erreicht, dass auch beim Schrumpfen des Modells während dem Austrocknen die Position des Modells im Einbau exakt reproduzierbar bleibt.

Des Weiteren kann im Montagesockel in der Montagefläche eine Ausnehmung zur Aufnahme eines Nutensteins vorliegen. Diese Ausnehmung hat einen Hinterschnitt an ihrer zu der Haltefläche weisenden Seite, mit dem der Nutenstein geführt wird. In diese Ausnehmung kann der Nutenstein eingesetzt und entlang dem Hinterschnitt verschoben werden. So kann der Montagesockel entlang der Montagefläche des Artikulatorober- oder -unterteils verschoben und befestigt werden. Eine Ausrichtung der beiden in einen Artikulator eingesetzten Montagesockel zueinander kann damit vorgenommen werden.

Die Ausnehmung kann auch derart gestaltet sein, dass sie nur aus zwei Führungsstegen besteht, die den Hinterschnitt aufweisen.

Auf der außen liegenden Seite des Nutensteins ist eine Gewindebohrung eingebracht. In dieses Gewinde wird die Befestigungsschraube des Artikulators geschraubt und damit der Nutenstein an das Artikulatorober- oder -unterteil gezogen. Der Nutenstein presst über den Hinterschnitt den Montagesockel an das Artikulatorober- oder -unterteil. Wird ein Nutenstein eingesetzt, der eine an die Befestigungsmöglichkeit eines Artikulators angepasste Gewindebohrung hat, kann die Montage auf unterschiedlichen Artikulatoren der gleichen Art ermöglicht werden. Ein Artikulator desselben Typs bedeutet, dass der Artikulator die gleichen Maße für den Abstand zwischen Artikulatoroberteil und Artikulatorunterteil aufweist und der vorgesehene Freiraum für die Gebissmodelle in horizontaler Richtung die gleiche Ausdehnung hat. Artikulatoren desselben Typs können sich in Bezug auf bewegliche Bauteile, Aufbaudetails und die Befestigungsmöglichkeit für Montageplatten unterscheiden.

Der Nutenstein kann in seiner Grundform eine längliche Ausdehnung haben, so dass er nach dem Einsetzen in die Ausnehmung oder zwischen die Führungsstege durch eine Drehung um seine Mittelachse in den Hinterschnitt eingreift. Im Besonderen kann die Grundform des Nutensteins rautenförmig sein, so dass er bei einer Drehung um seine Mittelachse um weniger als 90° bereits in den Hinterschnitt eingreift. Auch die Ecken der Raute können für eine platzsparende Anordnung verrundet sein.

Der Sockelkörper des Montagesockels muss nicht massiv sein. Er kann eine wabenartige Struktur haben, die Tragelemente aufweist, wie dies im Leichtbau Verwendung findet. Dies bedeutet, dass der Sockelkörper quasi als Skelettstruktur aufgebaut wird und nur Bereiche aufgebaut werden, die eine Funktion erfüllen. Er besteht dann aus Rippen und/oder stützenden Wänden sowie den Halteflächen mit ihrer Wandung. Die Mantelfläche, die den Sockel umgibt, muss nicht geschlossen sein. Durch diese Struktur wird vorteilhaft Material eingespart und es wird das Gewicht des Montagesockels reduziert.

Der Montagesockel hat eine bestimmte Höhe im Bereich von 15 mm bis 45 mm. Beim Eingipsen der Gebissmodelle muss der gesamte Zwischenraum bis zum Montagesockel mit Gips aufgefüllt werden. Dieser Zwischenraum ergibt sich aus der Höhe des Artikulators und dem Aufbau für die Montagevorrichtung. Dieser Zwischenraum ist kleiner, wenn der Montagesockel höher ist. Somit wird bei einem höheren Montagesockel für das zu erzeugende Gipsmodell weniger Gips benötigt.

Mit dem erfindungsgemäßen Montagesockel ist auch eine Artikulatorvorrichtung mit einem Paar Montagesockeln Teil der Erfindung.

Die Erfindung umfasst eine Artikulatorvorrichtung, die neben den Montagesockeln auch einen Gleichschaltungsschlüssel aufweist.

Ein Gleichschaltungsschlüssel wird verwendet, um Montagevorrichtungen in einem Artikulator zueinander auszurichten und die gleiche Ausrichtung der Montagevorrichtung am Artikulatoroberteil zur Montagevorrichtung am Artikulatorunterteil in unterschiedlichen Artikulatoren zu erreichen. Dies ist erforderlich, da das Erstellen der Gipsmodelle des Ober-und Unterkiefers nicht im gleichen Artikulator erfolgen muss und darüber hinaus von unterschiedlichen Personen an unterschiedlichen Orten durchgeführt werden kann. Für das Ausrichten hat der Gleichschaltungsschlüssel an beiden Enden ein Formelement, das die Positionierung gegenüber der Montagevorrichtung vorgibt. Wird der Gleichschaltungsschlüssel an einem Montageelement positioniert, kann anhand des Formelements auf der anderen Seite das zweite Montageelement passend am Artikulator fixiert werden.

Dieser Gleichschaltungsschlüssel der erfindungsgemäßen Artikulatorvorrichtung hat an beiden Enden einer Stützstruktur ein Schlüsselelement, das eine Form aufweist, die einer Negativform der durch die Wandung begrenzten Haltefläche des Montagesockels entspricht. Der Gleichschaltungsschlüssel kann so im Einbauzustand zwischen zwei Montagesockeln eine formschlüssige Verbindung mit den beiden Sockeln bilden. So können die Montagesockel bestmöglich ausgerichtet werden.

Ein erfindungsgemäßes Verfahren zum Einstellen eines Montagesockels einer Artikulatorvorrichtung für die Erstellung und Handhabung von retentionsplattenfreien Gipsmodellen sieht folgende Schritte vor:
- Anordnen der beiden Montagesockel der Artikulatorvorrichtung an einem Artikulator, indem die Montagefläche der Sockelkörper jedes Montagesockels an den Montageflächen des Artikulators positioniert werden,
- Positionieren des Abdrückelements, das in der Ausnehmung in der Haltefläche beweglich vorliegt, mit dem Hebeelement, das zwischen der Montagefläche und der Haltefläche eingesetzt ist, durch Betätigen der Betätigungsvorrichtung des Hebeelements, dabei Ausführen einer Absenkbewegung oder eine Hebebewegung des Abdrückelements und Einstellen des Hebeelements für einen Eingipsvorgang, einen Auswerfvorgang oder einen Versenkvorgang, wobei bei dem Eingipsvorgang das Abdrückelement in eine Zwischenpositon zwischen der ersten und der zweiten Position bewegt wird, wobei bei dem Auswerfvorgang das Abdrückelement in die erste Position bewegt wird, und wobei bei dem Versenkvorgang das Abdrückelement in die zweite Position bewegt wird.

In einer Ausführungsform des erfindungsgemäßen Verfahrens, in dem die Artikulatorvorrichtung für einen Eingipsvorgang eingestellt ist und das Abdrückelement teilweise aus der Fläche herausragt, werden folgende Schritte ausgeführt:
- Öffnen des Artikulators durch Aufklappen des Aktikulatoroberteils,
- Bereitstellen eines Oberkiefer- und eines Unterkiefergebissmodells und Bereitstellen von Gips,
- Anordnen des Gebissmodells des Oberkiefers auf einem separaten Ständerelement in der Ausrichtung mit der Zahnseite nach unten, wobei das Gebissmodell des Oberkiefers an den Markierungen des Artikulators ausgerichtet und positioniert wird, oder wobei die Ausrichtung entsprechend der Condylenachse erfolgt,
- Auftragen des Gipses auf die den Zähnen abgewandte Seite des Gebissmodells des Oberkiefers,
- Aufsetzen eines ferromagnetischen Körpers auf das Halteelement des Montagesockels,
- Aufsetzen des Artikulatoroberteils mit angeordnetem Montagesockel, wobei die Montagefläche des Montagesockels auf den Gips gedrückt wird und der Gips die Wandung des Montagesockels ausfüllt, wobei der ferromagnetische Körper vom Gips umgeben wird,
- trocknen und aushärten Lassen des Gipses,
- Entfernen des Ständerelements, auf dem das Gebissmodell des Oberkiefers positioniert ist,
- Umdrehen und Abstellen des Artikulators auf dem Artikulatoroberteil,
- Öffnen des Artikulators durch Aufklappen des Artikulatorunterteils,
- Anordnen des Gebissmodells des Unterkiefers auf dem Gebissmodell des Oberkiefers mit der Zahnseite nach unten, wobei eine Platte zum Einhalten eines Abstandes zwischen beiden Gebissmodellen zwischen die Modelle eingelegt wird,
- Auftragen des Gipses auf die den Zähnen abgewandte Seite des Gebissmodells des Unterkiefers,
- Aufsetzen eines ferromagnetischen Körpers auf das Halteelement des Montagesockels,
- Aufsetzen des Artikulatorunterteils mit angeordnetem Montagesockel, wobei die Montagefläche des Montagesockels auf den Gips gedrückt wird und der Gips die Wandung des Montagesockels ausfüllt, wobei der ferromagnetische Körper vom Gips umgeben wird,
- trocknen und aushärten Lassen des Gipses,
- Umdrehen und Abstellen des Artikulators auf dem Artikulatorunterteil.

Dieses Verfahren kann auch in umgekehrter Reihenfolge durchgeführt werden, indem der Artikulator zuerst auf dem Artikulatoroberteil abgestellt wird und mit dem Fixieren des Gebissmodells des Unterkiefers begonnen wird. Das Gebissmodell des Oberkiefers wird im Anschluss fixiert. Auch eine Variante, in der nur eines der Gebissmodelle eingegipst wird, ist möglich.

Weitere Ausführungsformen sind Verfahren, denen die Artikulatorvorrichtung für einen Versenkvorgang eingestellt ist und die Abdrückelemente von den Gebissmodellen des Oberkiefers und des Unterkiefers gelöst werden und in denen die Artikulatorvorrichtung für einen Auswerfvorgang eingestellt ist und die Gebissmodelle des Oberkiefers und des Unterkiefers entnommen werden.

Eine weitere Ausführungsform des erfindungsgemäßen Verfahrens zum Repositionieren von Gebissmodellen in einer Artikulatorvorrichtung durch Ausrichten der Montagesockel zueinander in einem beliebigen Artikulator, wobei dieser Artikulator der Artikulator aus einem erfindungsgemäßen Verfahren oder ein anderer Artikulator des gleichen Typs sein kann, sieht zur Positionierung der Montagefläche der Sockelkörper jedes Montagesockels an den Montageflächen des Artikulators folgende Schritte vor:
- Fixieren des unteren Montagesockels im Artikulator,
- Aufsetzen des Gleichschaltungsschlüssels mit seinem ersten Schlüsselelement auf die Haltefläche des unteren Montagesockels,
- Aufsetzen des zweiten, oberen Montagesockels auf das nach oben gerichtete Schlüsselelement des Gleichschaltungsschlüssels,
- Verschieben des Nutensteins in der Ausnehmung der Montagefläche an dem oberen Montagesockel, sodass die Befestigungsvorrichtung des Artikulators in die Gewindebohrung des Nutensteins geschraubt werden kann,
- Fixieren des oberen Montagesockels am Artikulator mit der Befestigungsvorrichtung, wenn die Schlüsselelemente des Gleichschaltungsschlüssels an den Halteflächen beider Montagesockel anliegen,
- Entfernen des Gleichschaltungsschlüssels.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Seitenansicht eines Artikulators aus dem Stand der Technik,
- **Fig. 2**: eine perspektivische Ansicht einer erfindungsgemäßen Artikulatorvorrichtung mit einem Paar Montageelemente und einem Gleichschaltungsschlüssel,
- **Fig. 3**: eine perspektivische Detailansicht eines Montagesockels,
- **Fig. 4**: einen Schnitt durch einen Montagesockel,
- **Fig. 5**: eine perspektivische Ansicht eines Gleichschaltungsschlüssels,
- **Fig. 6**: eine perspektivische Ansicht eines Montagesockels von unten,
- **Fig. 7a**: eine Ansicht eines Montagesockels von unten mit einem Nutenstein beim Ein-setzen,
- **Fig. 7b**: eine Ansicht eines Montagesockels von unten mit einem eingesetzten Nuten-stein.

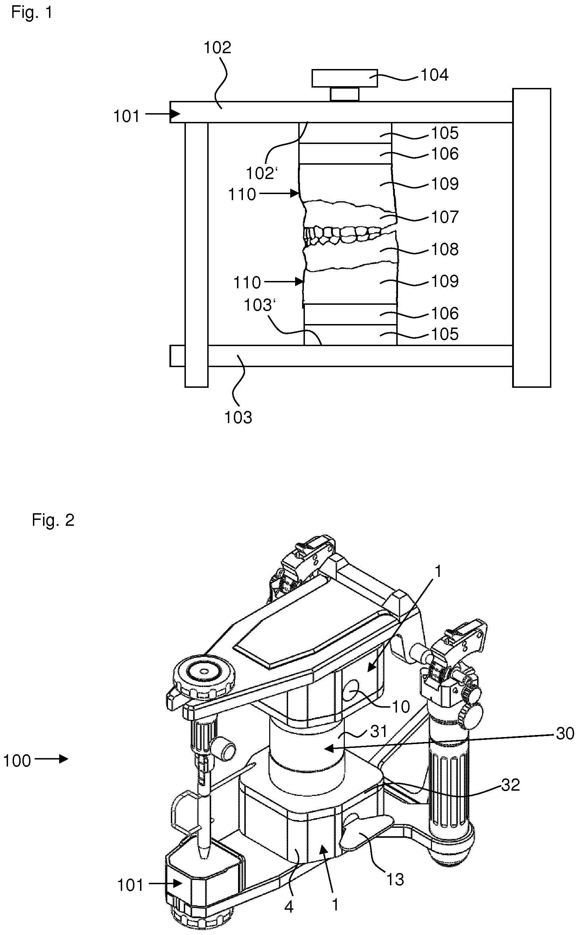

**Fig. 1** zeigt einen Artikulator nach dem Stand der Technik, in dem ein Gebissmodell eines Oberkiefers 107 und das eines Unterkiefers 108 eingebaut sind. Das Gebissmodell wird aus einem Abdruck des Ober- oder Unterkiefers angefertigt.

Grundsätzlich wird immer an einem Artikulatoroberteil das Gebissmodell des Oberkiefers und an einem Artikulatorunterteil das Gebissmodell des Unterkiefers angeordnet. Dabei spielt es keine Rolle, ob die Gebissmodelle einteilig sind, oder aus einzelnen Modellen von Zähnen oder Gebissteilen zusammengesetzt sind.

Die Gebissmodelle 107,108 in **Fig. 1** sind über Gipssockel 109 mit den Retentionsplatten 106 verbunden. Dieser Gipssockel 109 hat eine durch den Abstand von Gebissmodell 107,108 und Retentionsplatte 106 vorgegebene Höhe. Diese Höhe bestimmt den Gipsbedarf für das Eingipsen und damit auch das Gewicht der Gipsmodelle 110. Typischerweise sind die Gipssockel 109 höher, als dies für die reine Befestigung der Gebissmodelle 107,108 an der Retentionsplatte 106 notwendig ist. Dies führt neben höheren Kosten für den Gips zu einem höheren Gewicht und damit zu einer erschwerten Handhabung. Die Gipsmodelle 110 aus den fest miteinander verbundenen Teilen Gebissmodell 107, 108, Gipssockel 109 und Retentionsplatte 106 können als jeweils ein Teil aus dem Artikulator 101 entnommen und wieder eingesetzt werden. Beim Einsetzen wird die Retentionsplatte 106 mit der Montageplatte 105 verbunden und so das Gipsmodell 110 am Artikulator 101 fixiert. Die Montageplatte 105 ist mit der Befestigungsschraube 104 am Artikulator befestigt und kann gelöst werden, verbleibt aber dauerhaft im Artikulator 101. Zum Einsetzen oder Herausnehmen der Gipsmodelle 110 wird das Artikulatoroberteil, das über ein Gelenk zum vertikalen Teil des Artikulators beweglich ist, aufgeklappt.

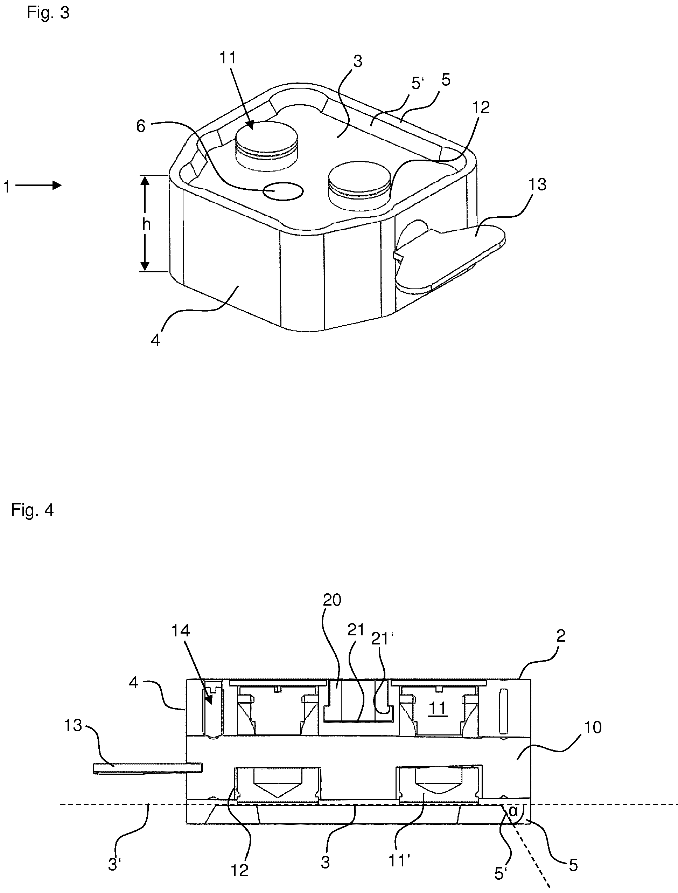

**Figuren 3, 4** **und** **6** zeigen einen erfindungsgemäßen Montagesockel 1, wie er zum Einbau in einen Artikulator 101 gemäß Fig. 2 vorgesehen ist. Der Montagesockel 1 besteht aus einem Sockelkörper mit einer Mantelfläche 4. Zur einen Seite ist er durch die Montagefläche 2 begrenzt, die im Einbauzustand am Artikulator 101 anliegt. Diese Fläche muss nicht zwingend eine geschlossene Fläche sein, sondern kann Bohrungen und Aussparungen enthalten. Auf der anderen Seite ist der Montagesockel durch die Haltefläche 3 begrenzt. An diese Haltefläche 3 wird das Gebissmodell 107,108 eingegipst.

In die Haltefläche 3 ist mindestens ein Halteelement 6 eingearbeitet, das permanentmagnetisch ist. Dieses Halteelement 6 dient dazu, die Gipsmodelle 110 zu halten. Hierzu haben die Gipsmodelle 110 ein ferromagnetisches Element eingearbeitet, so dass sie über Magnetkraft angezogen werden. Dies ist insbesondere für das Halten der Oberkiefermodelle 107 am Artikulatoroberteil 102 notwendig, da diese nicht durch die Schwerkraft an die Haltefläche 3 des Montagesockels 1 gedrückt werden.

Durch die magnetische Verbindung können die Gebissmodelle 107,108 mit dem Gipssockel 109 ohne zusätzliche Arbeitsschritte des Lösens aus dem Artikulator 101 herausgenommen werden. Es ist kein Abschrauben erforderlich. Beim erneuten Einsetzen in den Artikulator 101 wird das Gipsmodell 110 magnetisch angezogen und durch die Wandung 5 des Montagesockels 1 ausgerichtet, so dass nach einer groben Ausrichtung das Gipsmodell 110 automatisch in die vorgesehene Position findet und dort befestigt ist. Wird eine stärkere magnetische Kraft benötigt oder ist eine spezielle Verteilung der Kraft erforderlich, so können mehrere Halteelemente 6 in der Haltefläche 3 verteilt werden. Dies ist nicht in den Figuren dargestellt.

In der Haltefläche 3 liegt mindestens eine Ausnehmung 12 vor, in die ein Abdrückelement eingebracht ist. Dieses Abdrückelement dient nach dem Eingipsen zur Erleichterung des ersten Herausnehmens, wenn der Gips an der Haltefläche 3 haftet. Für jedes Abdrückelement ist eine Ausnehmung 12 erforderlich. Dabei ist die Form der Ausnehmung der Form der Abdrückelemente angepasst, so dass diese in der Ausnehmung 12 anliegen.

Die Abdrückelemente sind beweglich und können aus der Haltefläche 3 herausgedrückt oder in sie zurückgezogen werden. Dabei können sie für die Vorgänge Eingipsen, Auswerfen und Versenken verschiedene Positionen zwischen den maximalen Positionen einnehmen, wobei die Abdrückelemente in der ersten Position zum Auswerfen maximal aus der Haltefläche 3 herausragen, in der zweiten Position beim Versenken komplett in sie zurückgezogen sind und damit bündig mit der Haltefläche 3 abschließen. Zum Eingipsen können die Abdrückelemente in alle Positionen dazwischen gefahren werden. Die Maximalpositionen, die erste und die zweite Position, können eingerastet werden. Darüber hinaus können noch eine oder mehrere weitere Positionen mit einer Raste versehen sein. In einer dieser Positionen kann das Abdrückelement beispielsweise zu zwei Dritteln aus der Haltefläche 3 herausragen.

Die Bewegung der Abdrückelemente wird durch eine Hebevorrichtung erzeugt, die mit den Abdrückelementen in Wirkverbindung steht und von außerhalb des Montagesockels 1 betätigt werden kann. Die Hebevorrichtung kann aus einem oder mehreren Hebeelementen 10 bestehen. So kann für jedes Abdrückelement ein eigenes Hebeelement 10 eingesetzt werden oder auch ein Hebeelement 10 für mehrere Abdrückelemente 11. Das zumindest eine Hebeelement 10 ist zwischen der Montagefläche 2 und der Haltefläche 3 eingesetzt und kann innerhalb der Mantelfläche 4 enden, wobei in der Mantelfläche 4 eine Öffnung für die Betätigungsvorrichtung 13 vorhanden sein kann. Das Hebeelement 10 kann jedoch auch aus der Mantelfläche 4 heraus ragen oder komplett durch den Montagesockel 1 hindurch verlaufen und sich auf zwei oder mehr Seiten durch die Mantelfläche 4 hindurch erstrecken. In einer möglichen Variante kann die Hebevorrichtung 10 in ihrer Durchführung durch die Mantelfläche 4 geführt oder gelagert sein.

Ein Montagesockel 1, in dem die Abdrückelemente durch eine Exzenterwelle 10 bewegt werden, ist in **Fig. 4** zu sehen. Eine Drehung der Exzenterwelle 10 verursacht eine Auf-und Abbewegung der Abdrückelemente. Betätigt wird die Exzenterwelle mit einem Betätigungsschlüssel 13, der von außen an die Exzenterwelle 10 angesteckt wird.

Gemäß der in **Fig. 3** gezeigten Ausführungsform erstreckt sich die Exzenterwelle 10 nach außerhalb der Mantelfläche 4 des Sockels und geht selbst in eine Schlüsselgriff-Form über, so dass sie über diesen Griff betätigt werden kann. Die Exzenterwelle 10 kann auch innerhalb der Mantelfläche 4 abschließen, und mit einem Werkzeug wie beispielsweise einem Schraubenschlüssel betätigt werden, das in den Sockel hineingestreckt wird.

Hierbei ist nicht entscheidend, ob ein Betätigungsschlüssel lösbar mit der Exzenterwelle 10 verbunden ist oder an dieser verbleibt.

Nicht in den Figuren dargestellt sind andere Lösungen, in denen die Bewegung der Abdrückelemente anstelle mit einer Exzenterwelle 10 mit einer Schiebevorrichtung oder einer Vorrichtung, die über eine Hebelwirkung arbeitet, erzeugt wird.

In **Fig. 3** ist der Montagesockel 1 in einer perspektivischen Ansicht dargestellt. Hier sind als Abdrückelemente zwei Bolzen 11 zu sehen, die eine zylindrische Form haben.

Anders als **Fig. 3** zeigt, kann für die Funktion statt zweien auch ein einziges Abdrückelement eingesetzt werden, wobei eine gleichmäßige Kraftverteilung auf die Fläche vorteilhaft ist. Generell ist für ein einzelnes Abdrückelement eine Form geeignet, die sich über eine große Oberfläche bereitstellt, vorstellbar sind beispielsweise v- oder x-förmige Querschnitte. Bei mehreren Abdrückelementen ist eine kompaktere Form vorteilhafter, da diese die Führung der Bewegung erleichtert; beispielhaft hierfür sind die Bolzen 11 aus **Fig. 3****.** Auch die Ausnehmung 12 ist dabei einfacher zu erzeugen. Eine zylindrische Form bietet hinsichtlich der Fertigung und Handhabung die meisten Vorteile.

Die Bolzen 11 werden aus der Haltefläche 3 herausgedrückt oder in sie zurückgezogen. Diese Bewegung ist typischerweise senkrecht zur Haltefläche 3. Dies ist jedoch nicht zwingend erforderlich. Mit einer Bewegung mit davon abweichender Richtung, bei der die überwiegenden Anteile senkrecht zur Haltefläche 3 sind, kann das Gipsmodell 110 ebenfalls von der Haltefläche 3 gelöst werden. Hierbei müssen die Bolzen 11 jedoch beim Eingipsen ganz in die Haltefläche 3 zurückgezogen sein. Die Bolzen 11 werden bei der Bewegung an ihrer Mantelfläche geführt, so dass sie die geometrische Form eines Prismas oder auch eines schiefen Prismas aufweisen.

Darüber hinaus zeigt **Fig. 4** ein Druckstück 14, mit dem die Exzenterwelle 10 in der gewünschten Position eingerastet wird. So kann erreicht werden, dass die Bolzen 11 in der eingestellten Position verbleiben bis sie mit einer erneuten Betätigung des Hebeelements aus diesem herausbewegt werden. Es können die beiden Maximalpositionen fixiert werden, aber auch ein, zwei oder mehrere andere Positionen. Vorteilhaft sind drei Positionen, so dass eine Position, in der die Bolzen 11 zu einem Teil ausgefahren ist, eingestellt werden kann, um die Gebissmodelle 107,108 einzugipsen. Für das Lösen und Abdrücken können die beiden Maximalpositionen eingestellt werden.

In **Fig. 3** ist auch eine Wandung 5 zu sehen, die die Haltefläche 3 umgibt. Die Wandung 5 gibt die Position des Gipsmodells 110 auf dem Montagesockel 1 fest vor. Die Wandung 5 hat zu ihrer Mitte hin eine Anschrägung 5', die zum einen das Herausdrücken des Gipsmodells 110 nach dem Eingipsen der Gebissmodelle 107,108, zum anderen das erneute Einsetzen erleichtert, da die Position beim Einsetzen noch nicht exakt gefunden werden muss, sondern beim Annähern des Gipsmodells 110 an die Haltefläche 3 eine Zentrierung über die Anschrägung 5' erfolgt. Die Anschrägung 5' weist dazu in Bezug auf die Halteflächenebene 3' einen Winkel α kleiner als 90° auf. Dies bedeutet, dass auf der Nicht-Materialseite ein stumpfer Winkel entsteht. Darüber hinaus wird durch die Anschrägung 5' erreicht, dass die Positionierung des Gipsmodells 100 auch dann noch exakt möglich ist, wenn das Gipsmodell 110 während des Trocken- und Aushärtevorgangs schrumpft. In diesem Fall rutscht das Gipsmodell 110 weiter in den von der Wandung 5 umgebenen Bereich hinein und liegt weiterhin an der Anschrägung 5' an und wird damit in die gewünschte Position gebracht. Vorteilhaft für diese Funktion sind Winkel α, die in einem Bereich zwischen 30° und 60° liegen.

In **Fig. 4** ist in der Montagefläche 2 des Montagesockels 1 auch eine Ausnehmung 21 für einen Nutenstein 20 gezeigt. Diese Ausnehmung 21 hat zur Halteseite 3 hin einen Hinterschnitt 21'. Dieser Hinterschnitt erstreckt sich beidseitig entlang der Ausdehnung der Ausnehmung 21. Der Nutenstein sitzt auf beiden Seiten mit seiner abgesetzten Fläche auf dem Hinterschnitt 21' auf. Durch eine längliche Ausdehnung der Ausnehmung 21 wird der Nutenstein 20 entlang der Ausdehnung geführt. Der Nutenstein 20 hat auf der außen liegenden Seite eine Gewindebohrung über die der Nutenstein 20 an der Befestigungsschraube 104 des Artikulators 101 angeschraubt werden kann. Durch unterschiedliche Nutensteine 20 mit unterschiedlichen an den jeweiligen Artikulator 101 angepasste Gewindebohrungen ist die Montierbarkeit auf verschieden Artikulatoren 101 möglich. Die Verschieblichkeit des Nutensteins 20 innerhalb der Ausnehmung 21 ermöglicht zusammen mit der Fixierungsmöglichkeit über die Gewindebohrung eine Ausrichtung des Montagesockels 1 im jeweiligen Artikulator 101.

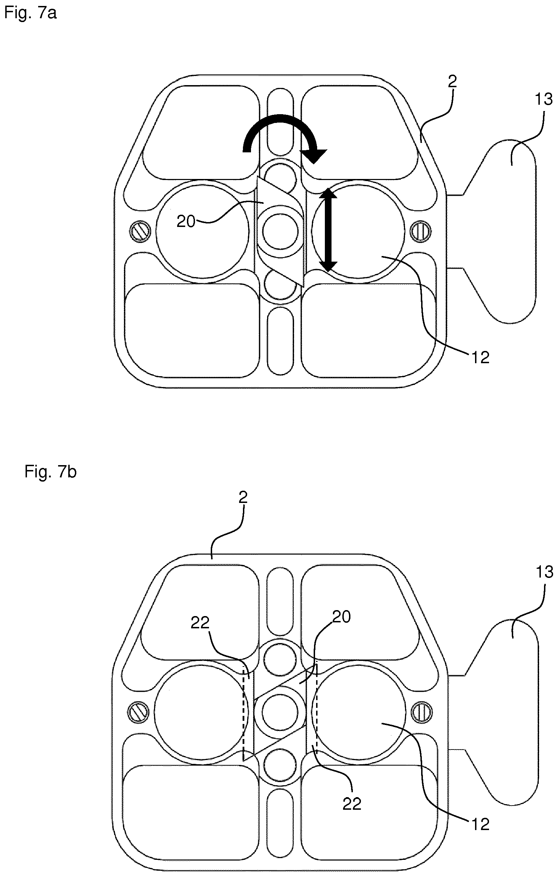

Eine abweichende Form eines Nutensteins 20 zeigen die **Figuren 7a und 7b****.** Hier hat der Nutenstein 20 eine rautenförmige Grundform mit zwei abgerundeten Ecken. Diese Form ermöglicht ein einfaches in Eingriff Bringen des Nutensteins 20 durch eine Drehbewegung, ohne dass der Nutenstein 20 durch andere Geometrien behindert wird. Der Nutenstein 20 kann in seiner schmaleren Ausdehnung eingesetzt werden und anschließend so gedreht werden, dass die abgesetzten Flächen am Ende der längeren Ausdehnung in den Hinterschnitt 21' eingreifen. In diesen beiden **Figuren 7a und 7b** ist auch eine Ausführungsform der Ausnehmung 21 für den Nutenstein 20 gezeigt, bei der die Ausnehmung 21 nur aus zwei Führungsstegen 22 besteht, die den Hinterschnitt 21' aufweisen. Auch hier kann der Nutenstein 20 entlang der Führungsstege 22 geführt verschoben werden.

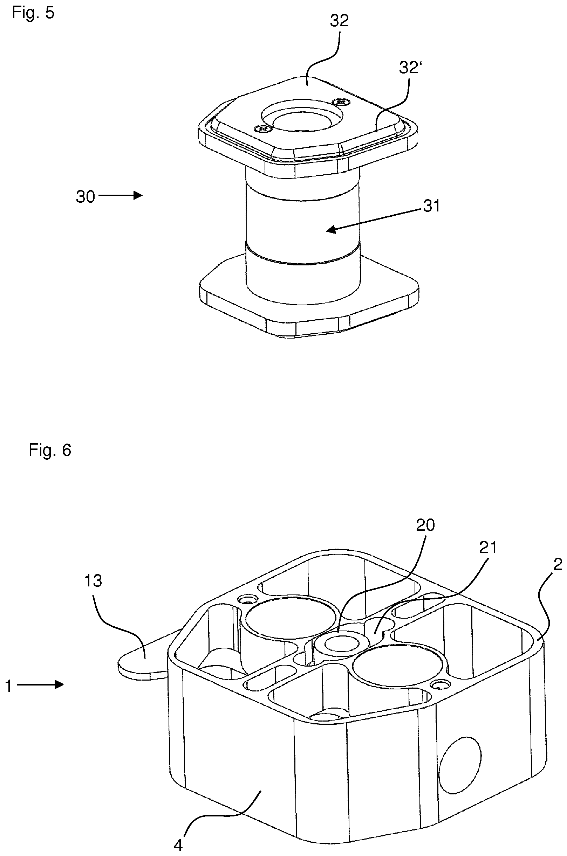

**Fig. 6** zeigt die Montageseite 2 eines Montagesockels 1. Im Besonderen ist diese Montagefläche 2 nicht geschlossen, sondern ist durch Aussparungen und Öffnungen durchdrungen. Der Sockelkörper ist in dieser Ausführungsform nicht massiv, sondern als Skelettstruktur aufgebaut. Es sind nur die Bereiche aufgebaut, die eine Funktion erfüllen. Er besteht neben der Mantelfläche 4, der Haltfläche 3 und der die Haltefläche 3 umgebenden Wandung 5 aus Rippen, Trag- und Stützelementen, die Bohrungen, Führungen und Anlageflächen tragen. Alle weiteren Bereiche des Sockelkörpers sind hohl, so dass bei der Herstellung Material eingespart werden kann. Entscheidender Vorteil eines solchen Aufbaus ist darüber hinaus die zu erreichende Gewichtseinsparung.

Die Höhe h des Montagesockels 1, wie in **Fig. 3** angegeben, kann unterschiedliche Werte annehmen. Dabei ist die Mindesthöhe durch die Baugröße der einzelnen im Montagesockel 1 beinhalteten Elemente gegeben. Die maximale Höhe wird durch den Artikulator 101 vorgegeben, da das Eingipsen der Gebissmodelle 107,108 auf den Montagesockeln 1 im Einbauzustand im Artikulator 101 noch möglich ist. Dabei ist die benötigte Gipsmenge zum Eingipsen der Gebissmodelle 107,108 geringer, je größer die Höhe h des Montagesockels 1 ist.

**Fig. 5** zeigt einen Gleichschaltungsschlüssel 30, der aus einer Stützstruktur 31 besteht, die an beiden Enden ein Schlüsselelement 32 trägt. Das Schlüsselelement 32 hat eine Form, die der Negativform der durch die Wandung 5 umgebenden Haltefläche 3 entspricht. Dieses Schlüsselelement 32 kann exakt in den Montagesockel 1 eingesetzt werden. Der Montagesockel 1 und der Gleichschaltungsschlüssel 30 sind dann in ihrer Lage zueinander bestimmt. Diese eindeutige Bestimmbarkeit der Lage wird genutzt, um die Montagesockel 1 in Artikulator 101 zueinander auszurichten. So wird der untere Montagesockel 1 im Artikulator 101 fixiert. Anschließend wird der Gleichschaltungsschlüssel 30 mit seinem ersten Schlüsselelement 32 auf die Haltefläche 3 des Montagesockels 1 gesetzt. Auf das nun nach oben gerichtete Schlüsselelement 32 wird der zweite obere Montagesockel 1 gesetzt. An diesem oberen Montagesockel 1 wird nun der Nutenstein 20 so verschoben, dass die Befestigungsvorrichtung 104 des Artikulators 101 in die Gewindebohrung des Nutensteins 20 geschraubt werden kann. Liegen die Schlüsselelemente 32 des Gleichschaltungsschlüssels 30 an den Halteflächen 3 beider Montagesockel 1 an, so kann der obere Montagesockel 1 mit der Befestigungsvorrichtung 104 des Artikulators 101 am Artikulator 101 fixiert werden. **Fig. 2** zeigt eine solche Artikulatorvorrichtung 100. Anschließend kann der Gleichschaltungsschlüssel 30 wieder entfernt werden und die Montagesockel 1 verbleiben im zueinander ausgerichteten Zustand im Artikulator 101.

Werden an verschiedenen Artikulatoren 101 die Montagesockel 1 auf diese Weise ausgerichtet, so sind Gipsmodelle 110, die in diesen Artikulatoren 101 eingebaut sind, ebenfalls in der gleichen Lage zueinander.

### BEZUGSZEICHENLISTE

- 1: Montagesockel
- 2: Montagefläche
- 3: Haltefläche
- 3': Halteflächenebene
- 4: Mantelfläche
- 5: Wandung
- 5': Anschrägung
- 6: Halteelement
- 10: Exzenterwelle
- 11: Bolzen
- 12: Ausnehmung
- 13: Betätigungsvorrichtung für Exzenterwelle
- 14: Druckstück für Positionsarretierung
- 20: Nutenstein
- 21: Ausnehmung für Nutenstein
- 21': Hinterschnitt
- 22: Führungssteg
- 30: Gleichschaltungsschlüssel
- 31: Stützstruktur
- 32: Schlüsselelement
- 32': Rand des Schlüsselelements
- 100: Artikulatorvorrichtung
- 101: Artikulator
- 102: Artikulatoroberteil
- 102': Montagefläche des Artikulatoroberteils
- 103: Artikulatorunterteil
- 103': Montagefläche des Artikulatorunterteils
- 104: Befestigungsschraube für Montageplatte
- 105: Montageplatte
- 106: Retentionsplatte
- 107: Gebissmodell des Oberkiefers
- 108: Gebissmodell des Unterkiefers
- 109: Gipssockel
- 110: Gipsmodell
- h: Höhe des Montagesockels
- α: Winkel zwischen Anschrägung und Halteflächenebene

## Patentansprüche

1. Montagesockel (1) für einen Artikulator (101) in der Zahnmedizintechnik zur Erstellung und Handhabung von retentionsplattenfreien Gipsmodellen,
der einen Sockelkörper mit einer in einem Montagezustand dem Artikulator zugewandten Montagefläche (2) und eine von dieser abgewandten Haltefläche (3) aufweist, und wobei in der Haltefläche (3) zumindest ein permanentmagnetisches Halteelement (6) vorliegt,
**dadurch gekennzeichnet, dass**
der Montagesockel (1)
- zumindest eine Ausnehmung (12) in der Haltefläche (3) und zumindest ein Abdrückelement aufweist, das jeweils beweglich in die Ausnehmung (12) eingebracht ist, und
- zumindest ein Hebeelement aufweist, das zwischen der Montagefläche (2) und der Haltefläche (3) eingesetzt ist,
wobei das zumindest eine Hebeelement (10) mit dem zumindest einen Abdrückelement in Wirkverbindung steht und von außerhalb des Montagesockels (1) zur Ausführung einer Hebe- und Absenkbewegung des zumindest einen Abdrückelements betätigbar ist, und
wobei das zumindest eine Hebeelement (10) ausgebildet ist, das zumindest eine Abdrückelement zwischen zwei vorgegebenen Maximalpositionen zu bewegen und zumindest in den zwei vorgegebenen Maximalpositionen zu positionieren, wobei das Abdrückelement in einer ersten Maximalposition am weitesten aus der Haltefläche (3) herausragt und in einer zweiten Maximalposition einen bündigen Abschluss mit der Haltefläche (3) bereitstellt.

2. Montagesockel (1) nach Anspruch 1,
**dadurch gekennzeichnet, dass**
das Abdrückelement ein Bolzen (11) mit prismatischer oder zylindrischer Form ist, und
dass das Hebeelement (10) eine Exzenterwelle (10) ist,
wobei die Exzenterwelle (10) eine Betätigungseinrichtung aufweist, mittels der die Betätigung ausführbar ist und wobei
- die Exzenterwelle (10) sich innerhalb des Sockelkörpers erstreckt oder sich aus dem Sockelkörper herauserstreckt, und/oder
- die Exzenterwelle (10) einstückig mit der Betätigungseinrichtung ausgebildet ist oder die Exzenterwelle (10) eine Eingriffsvorrichtung aufweist, die mit einer lösbar verbindbaren Betätigungsvorrichtung in Eingriff bringbar ist.

3. Montagesockel (1) nach Anspruch 1 oder 2,
**dadurch gekennzeichnet, dass**
die Haltefläche (3) außenumfänglich durch eine Wandung (5) begrenzt ist, wobei bevorzugt die Wandung (5) zumindest teilweise auf ihrer Richtung einer Mitte der Haltefläche (3) weisenden Seite eine Anschrägung (5') aufweist, die in Bezug auf eine Halteflächenebene (3') einen Winkel α kleiner als 90°, bevorzugt größer als 30° und kleiner als 60° aufweist.

4. Montagesockel (1) nach einem der Ansprüche 1 bis 3,
**dadurch gekennzeichnet, dass**
im Montagesockel (1) in der Montagefläche (2) eine Ausnehmung (21) zur Aufnahme eines Nutensteins (20) vorliegt, die einen Hinterschnitt (21') an ihrer zu der Haltefläche weisenden Seite aufweist, der die Führung des Nutensteins (20) bildet.

5. Montagesockel (1) nach einem der Ansprüche 1 bis 4,
**dadurch gekennzeichnet, dass**
der Sockelkörper nicht massiv ist, und durch eine wabenartige Struktur gebildet wird, die Tragelemente aufweist, wobei eine Mantelfläche, die den Sockelkörper zumindest abschnittsweise umfänglich umgibt, an die Wandung (5), die die Haltefläche begrenzt, anschließt.

6. Montagesockel (1) nach einem der Ansprüche 1 bis 5,
**dadurch gekennzeichnet, dass**
der Montagesockel (1) eine Höhe (h) in einem Bereich von 15 mm bis 45 mm aufweist.

7. Artikulatorvorrichtung (100) für die Zahnmedizintechnik,
**dadurch gekennzeichnet, dass**
die Artikulatorvorrichtung (100) einen Artikulator (101) und ein an dem Artikulator (101) anordenbares Paar Montagesockel (1) nach zumindest einem der Ansprüche 1 bis 6 aufweist,
wobei der Artikulator (101) ein Artikulatoroberteil (102) mit einer Montagefläche (102') zum Anbringen einer Montageplatte (105) für ein Gebissmodell eines Oberkiefers (107) und ein Artikulatorunterteil (103) mit einer Montagefläche (103') zum Anbringen einer Montageplatte (105) für ein Gebissmodell eines Unterkiefers (108) aufweist, wobei das Artikulatoroberteil (102) aufklappbar ist.

8. Artikulatorvorrichtung (100) nach Anspruch 7,
**dadurch gekennzeichnet, dass**
die Artikulatorvorrichtung (100) einen Gleichschaltungsschlüssel (30) aufweist, der an beiden Enden einer Stützstruktur (31) ein Schlüsselelement (32) aufweist, das einer Negativform der durch die Wandung (5) begrenzten Haltefläche (3) des jeweiligen Montagesockels (1) für den Oberkiefer und den Unterkiefer entspricht, so dass der Gleichschaltungsschlüssel (30) dazu ausgebildet ist, in einem Einbauzustand zwischen zwei Montagesockeln (1) eine formschlüssige Verbindung der beiden Sockel (1) bereitzustellen.

9. Verfahren zum Einstellen eines Montagesockels (1) einer Artikulatorvorrichtung (100) nach zumindest einem der Ansprüche 7 oder 8 für die Erstellung und Handhabung von retentionsplattenfreien Gipsmodellen,
**umfassend die Schritte**
- Anordnen der beiden Montagesockel (1) der Artikulatorvorrichtung (100) an dem Artikulator (101), dabei Positionieren der Montagefläche (2) der Sockelkörper jedes Montagesockels (1) an den Montageflächen (102', 103') des Artikulators (100),
- Positionieren des Abdrückelements, das in der Ausnehmung (12) in der Haltefläche (3) beweglich vorliegt, mit dem Hebeelement (10), das zwischen der Montagefläche (2) und der Haltefläche (3) eingesetzt ist, durch Betätigen der Betätigungsvorrichtung (13) des Hebeelements (10), dabei Ausführen einer Absenkbewegung oder eine Hebebewegung des Abdrückelements und Einstellen des Hebeelements für einen Eingipsvorgang, einen Auswerfvorgang oder einen Versenkvorgang, wobei bei dem Eingipsvorgang das Abdrückelement in eine Zwischenpositon zwischen der ersten und der zweiten Position bewegt wird, wobei bei dem Auswerfvorgang das Abdrückelement in die erste Position bewegt wird, und wobei bei dem Versenkvorgang das Abdrückelement in die zweite Position bewegt wird.

10. Verfahren nach Anspruch 9, wobei die Artikulatorvorrichtung (101) für einen Eingipsvorgang eingestellt ist und das Abdrückelement teilweise aus der Fläche herausragt,
**umfassend die Schritte**
- Öffnen des Artikulators (101) durch Aufklappen des Aktikulatoroberteils (102),
- Bereitstellen eines Oberkiefer- und eines Unterkiefergebissmodells und Bereitstellen von Gips,
- Anordnen des Gebissmodells des Oberkiefers (107) auf einem separaten Ständerelement in der Ausrichtung mit der Zahnseite nach unten,
- Auftragen des Gipses auf die den Zähnen abgewandte Seite des Gebissmodells des Oberkiefers (107),
- Aufsetzen eines ferromagnetischen Körpers auf das Halteelement (6) des Montagesockels (1),
- Aufsetzen des Artikulatoroberteils (102) mit angeordnetem Montagesockel (1), wobei die Montagefläche (2) des Montagesockels (1) auf den Gips gedrückt wird und der Gips die Wandung des Montagesockels (1) ausfüllt, wobei der ferromagnetische Körper vom Gips umgeben wird,
- trocknen und aushärten Lassen des Gipses,
- Entfernen des Ständerelements, auf dem das Gebissmodell des Oberkiefers (107) positioniert ist,
- Umdrehen und Abstellen des Artikulators (101) auf dem Artikulatoroberteil (102),
- Öffnen des Artikulators (101) durch Aufklappen des Aktikulatorunterteils (103),
- Anordnen des Gebissmodells des Unterkiefers (108) auf dem Gebissmodell des Oberkiefers (107) mit der Zahnseite nach unten, wobei eine Platte zum Einhalten eines Abstandes zwischen beiden Gebissmodellen (107,108) zwischen die Modelle eingelegt wird,
- Auftragen des Gipses auf die den Zähnen abgewandte Seite des Gebissmodells des Unterkiefers (108),
- Aufsetzen eines ferromagnetischen Körpers auf das Halteelement (6) des Montagesockels (1),
- Aufsetzen des Artikulatorunterteils (103) mit angeordnetem Montagesockel (1), wobei die Montagefläche (2) des Montagesockels (1) auf den Gips gedrückt wird und der Gips die Wandung des Montagesockels (1) ausfüllt, wobei der ferromagnetische Körper vom Gips umgeben wird,
- trocknen und aushärten Lassen des Gipses,
- Umdrehen und Abstellen des Artikulators (101) auf dem Artikulatorunterteil (103).

11. Verfahren nach Anspruch 9, wobei die Artikulatorvorrichtung (101) für einen Versenkvorgang eingestellt ist und die Abdrückelemente von den Gebissmodellen des Oberkiefers (107) und des Unterkiefers (108) gelöst werden.

12. Verfahren nach Anspruch 9, wobei die Artikulatorvorrichtung (101) für einen Auswerfvorgang eingestellt ist und die Gebissmodelle des Oberkiefers (107) und des Unterkiefers (108) entnommen werden.

13. Verfahren zum Repositionieren von Gebissmodellen (107,108) in einer Artikulatorvorrichtung (100) nach Anspruch 8 durch Ausrichten der Montagesockel (1) zuei-nander in einem beliebigen Artikulator (101), wobei dieser Artikulator (101) der Artikulator (101) aus dem Verfahren aus einem der Ansprüche 9 bis 12 oder ein anderer Artikulator (101) des gleichen Typs sein kann, und Positionieren der Montagefläche (2) der Sockelkörper jedes Montagesockels (1) an den Montageflächen (102',103') des Artikulators (100),
**umfassend die Schritte**
- Fixieren eines unteren Montagesockels (1) im Artikulator (101),
- Aufsetzen des Gleichschaltungsschlüssels (30) mit seinem ersten Schlüsselelement (32) auf die Haltefläche (3) des unteren Montagesockels (1),
- Aufsetzen eines zweiten, oberen Montagesockels (1) auf das nach oben gerichtete Schlüsselelement (32) des Gleichschaltungsschlüssels (30),
- Verschieben des Nutensteins (20) in der Ausnehmung (21) der Montagefläche (2) an dem oberen Montagesockel (1), sodass die Befestigungsvorrichtung (104) des Artikulators (101) in die Gewindebohrung des Nutensteins (20) geschraubt werden kann,
- Fixieren des oberen Montagesockels (1) am Artikulator (101) mit der Befestigungsvorrichtung (104), wenn die Schlüsselelemente (32) des Gleichschaltungsschlüssels (30) an den Halteflächen (3) beider Montagesockel (1) anliegen,
- Entfernen des Gleichschaltungsschlüssels (30).

## Claims

1. A mounting base (1) for an articulator (101) in dental technology for creating and handling plaster models that are free from retention plates,
which has a base body with a mounting surface (2) facing the articulator in a mounting state and a holding surface (3) facing away therefrom, and wherein at least one permanently magnetic holding element (6) is provided in the holding surface (3),
**characterised in that**
the mounting base (1)
- has at least one recess (12) in the holding surface (3) and at least one impression element each of which is movably placed into the recess (12), and
- has at least one lifting element which is inserted between the mounting surface (2) and the holding surface (3),
wherein the at least one lifting element (10) is in operative connection with the at least one impression element and can be actuated from outside the mounting base (1) in order to carry out a lifting movement and a lowering movement of the at least one impression element, and
wherein the at least one lifting element (10) is configured to move the at least one impression element between two predefined maximum positions and to position the same at least in the two predefined maximum positions, wherein, in a first maximum position, the impression element protrudes farthest out of the holding surface (3) and, in a second maximum position, is flush with the holding surface (3).

2. The mounting base (1) according to claim 1,
**characterised in that**
the impression element is a bolt (11) having a prismatic or cylindrical shape and
the lifting element (10) is an eccentric shaft (10),
wherein the eccentric shaft (10) has an actuation mechanism by means of which the actuation can be carried out, and wherein
- the eccentric shaft (10) extends inside the base body or extends out of the base body, and/or
- the eccentric shaft (10) is formed integrally with the actuation mechanism or the eccentric shaft (10) has an engagement device which can be brought into engagement with a detachably connectable actuation device.

3. The mounting base (1) according to claim 1 or 2,
**characterised in that**
the holding surface (3) is delimited by a wall (5) on its outer circumference, wherein preferably the wall (5) has, at least in part, a chamfer (5') on its side facing towards a centre of the holding surface (3), said chamfer (5') having an angle α of less than 90°, preferably of more than 30° and less than 60°, in relation to a holding surface plane (3').

4. The mounting base (1) according to any one of claims 1 to 3,
**characterised in that**
a recess (21) for receiving a sliding block (20) is provided in the mounting surface (2) of the mounting base (1), said recess (21) having an undercut (21') on its side facing the holding surface, said undercut (21') forming the guideway of the sliding block (20).

5. The mounting base (1) according to any one of claims 1 to 4,
**characterised in that**
the base body is not massive and is formed by a honeycombed structure which has supporting elements, wherein a lateral surface which circumferentially surrounds the base body at least in certain sections is adjacent to the wall (5) delimiting the holding surface.

6. The mounting base (1) according to any one of claims 1 to 5,
**characterised in that**
the mounting base (1) has a height (h) within a range from 15 mm to 45 mm.

7. An articulator device (100) for dental technology,
**characterised in that**
the articulator device (100) has an articulator (101) and a pair of mounting bases (1) according to at least any one of claims 1 to 6, wherein said pair of mounting bases (1) can be arranged on the articulator (101),
wherein the articulator (101) has an upper articulator part (102) with a mounting surface (102') for attaching a mounting plate (105) for a dental model of an upper jaw (107) and has a lower articulator part (103) with a mounting surface (103') for attaching a mounting plate (105) for a dental model of a lower jaw (108), wherein the upper articulator part (102) can be folded open.

8. The articulator device (100) according to claim 7,
**characterised in that**
the articulator device (100) has a synchronisation key (30) having a key element (32) on both ends of a supporting structure (31), said key element (32) corresponding to a female mould of the holding surface (3) of the respective mounting base (1) for the upper jaw and the lower jaw, said holding surface (3) being delimited by the wall (5), with the result that the synchronisation key (30), when being installed between two mounting bases (1), is configured to provide a form-locking connection of the two bases (1).

9. A method for adjusting a mounting base (1) of an articulator device (100) according to at least any one of claims 7 or 8 for creating and handling plaster models that are free from retention plates,
**comprising the steps of**
- arranging the two mounting bases (1) of the articulator device (100) on the articulator (101), therein positioning the mounting surface (2) of the base bodies of each mounting base (1) on the mounting surfaces (102', 103') of the articulator (100),
- positioning the impression element that is movably provided in the recess (12) in the holding surface (3) using the lifting element (10) that is inserted between the mounting surface (2) and the holding surface (3), by actuating the actuating device (13) of the lifting element (10), therein carrying out a lowering movement or a lifting movement of the impression element and adjusting the lifting element for a plastering operation, an ejecting operation or a plunging operation, wherein, during the plastering operation, the impression element is moved into an intermediate position between the first and second positions, wherein, during the ejecting operation, the impression element is moved into the first position, and wherein, during the plunging operation, the impression element is moved into the second position.

10. The method according to claim 9, wherein the articulator device (101) is adjusted for a plastering operation and the impression element partially protrudes from the surface,
**comprising the steps of**
- opening the articulator (101) by folding the upper articulator part (102) open,
- providing a dental model of the upper jaw and a dental model of the lower jaw and providing plaster,
- arranging the dental model of the upper jaw (107) on a separate stand element with the tooth side oriented downwards,
- applying the plaster onto the side of the dental model of the upper jaw (107) facing away from the teeth,
- placing a ferromagnetic body onto the holding element (6) of the mounting base (1),
- placing the upper articulator part (102) with the arranged mounting base (1), wherein the mounting surface (2) of the mounting base (1) is pressed onto the plaster and the plaster fills the wall of the mounting base (1), wherein the ferromagnetic body is surrounded by the plaster,
- allowing the plaster to dry and harden,
- removing the stand element on which the dental model of the upper jaw (107) is positioned,
- turning the articulator (101) around and depositing it on the upper articulator part (102),
- opening the articulator (101) by folding the lower articulator part (103) open,
- arranging the dental model of the lower jaw (108) on the dental model of the upper jaw (107) with the tooth side oriented downwards, wherein a plate for keeping a distance between the two dental models (107, 108) is inserted between the models,
- applying the plaster onto the side of the dental model of the lower jaw (108) facing away from the teeth,
- placing a ferromagnetic body onto the holding element (6) of the mounting base (1),
- placing the lower articulator part (103) with the arranged mounting base (1), wherein the mounting surface (2) of the mounting base (1) is pressed onto the plaster and the plaster fills the wall of the mounting base (1), wherein the ferromagnetic body is surrounded by the plaster,
- allowing the plaster to dry and harden,
- turning the articulator (101) around and depositing it on the lower articulator part (103).

11. The method according to claim 9, wherein the articulator device (101) is adjusted for a plunging operation and the impression elements are detached from the dental models of the upper jaw (107) and the lower jaw (108).

12. The method according to claim 9, wherein the articulator device (101) is adjusted for an ejecting operation and the dental models of the upper jaw (107) and the lower jaw (108) are removed.

13. A method for repositioning dental models (107, 108) in an articulator device (100) according to claim 8 by orienting the mounting bases (1) in relation to each other in any articulator (101) desired, wherein this articulator (101) may be the articulator (101) from the method of any one of claims 9 to 12 or a different articulator (101) of the same type, and positioning the mounting surface (2) of the base bodies of each mounting base (1) on the mounting surfaces (102', 103') of the articulator (100),
**comprising the steps of**
- locating a lower mounting base (1) in the articulator (101),
- placing the synchronisation key (30) with its first key element (32) onto the holding surface (3) of the lower mounting base (1),
- placing a second upper mounting base (1) onto the key element (32) of the synchronisation key (30), said key element (32) being oriented upwards,
- displacing the sliding block (20) in the recess (21) of the mounting surface (2) on the upper mounting base (1), with the result that the fixing device (104) of the articulator (101) can be screwed into the threaded hole of the sliding block (20),
- locating the upper mounting base (1) on the articulator (101) using the fixing device (104), once the key elements (32) of the synchronisation key (30) abut against the holding surfaces (3) of both mounting bases (1),
- removing the synchronisation key (30).

## Revendications

1. Socle de montage (1) pour un articulateur (101) dans la technologie de médecine dentaire pour la création et le maniement de modèles de plâtre exempts de plaque de rétention,
qui présente un corps de socle avec une face de montage (2) tournée vers l'articulateur dans un état de montage et une face de maintien (3) détournée de celle-ci, et dans lequel au moins un élément de maintien (6) magnétique en permanence est présent dans la face de maintien (3),
**caractérisé en ce que**
le socle de montage (1)
- présente au moins un évidement (12) dans la face de maintien (3) et au moins un élément d'empreinte qui est à chaque fois introduit de manière mobile dans l'évidement (12), et
- présente au moins un élément de soulèvement qui est inséré entre la face de montage (2) et la face de maintien (3),
dans lequel l'au moins un élément de soulèvement (10) est en connexion active avec l'au moins un élément d'empreinte et peut être actionné de l'extérieur du socle de montage (1) pour la réalisation d'un mouvement de soulèvement et d'abaissement de l'au moins un élément d'empreinte, et dans lequel l'au moins un élément de soulèvement (10) est réalisé pour déplacer l'au moins un élément d'empreinte entre deux positions maximales prédéfinies et le positionner au moins dans les deux positions maximales prédéfinies, dans lequel l'élément d'empreinte dépasse de la face de maintien (3) au plus loin dans une première position maximale et met à disposition une bordure à fleur avec la face de maintien (3) dans une seconde position maximale.

2. Socle de montage (1) selon la revendication 1,
**caractérisé en ce que**
l'élément d'empreinte est un boulon (11) avec une forme prismatique ou cylindrique, et
**que** l'élément de soulèvement (10) est un arbre excentrique (10),
dans lequel l'arbre excentrique (10) présente un dispositif d'actionnement au moyen duquel l'actionnement peut être réalisé et dans lequel
- l'arbre excentrique (10) s'étend au sein du corps de socle ou s'étend hors du corps de socle, et/ou
- l'arbre excentrique (10) est réalisé d'une pièce avec le dispositif d'actionnement ou l'arbre excentrique (10) présente un dispositif d'engagement qui peut être engagé avec un dispositif d'actionnement pouvant être connecté de manière amovible.

3. Socle de montage (1) selon la revendication 1 ou 2,
**caractérisé en ce que**
la face de maintien (3) est limitée par une paroi (5) au niveau de la périphérie externe, dans lequel la paroi (5) présente de préférence au moins partiellement sur son côté tourné vers la direction d'un milieu de la face de maintien (3) un biseautage (5') qui présente un angle α inférieur à 90°, de préférence supérieur à 30° et inférieur à 60° par rapport à un plan de face de maintien (3').

4. Socle de montage (1) selon une des revendications 1 à 3,
**caractérisé en ce que**
un évidement (21) pour la réception d'un coulisseau (20) qui présente une contre-dépouille (21') sur son côté tourné vers la face de maintien qui forme le guidage du coulisseau (20) est présent dans le socle de montage (1) dans la face de montage (2).

5. Socle de montage (1) selon une des revendications 1 à 4,
**caractérisé en ce que**
le corps de socle n'est pas massif et est formé par une structure en nid d'abeilles qui présente des éléments porteurs, dans lequel une face d'enveloppe qui entoure le corps de socle de manière périphérique au moins par sections se rattache à la paroi (5) qui limite la face de maintien.

6. Socle de montage (1) selon une des revendications 1 à 5,
**caractérisé en ce que**
le socle de montage (1) présente une hauteur (h) dans une région de 15 mm à 45 mm.

7. Dispositif d'articulateur (100) pour la technologie de médecine dentaire,
**caractérisé en ce que**
le dispositif d'articulateur (100) présente un articulateur (101) et une paire de socles de montage (1) selon au moins une des revendications 1 à 6 pouvant être disposés sur l'articulateur (101),
dans lequel l'articulateur (101) présente une partie supérieure d'articulateur (102) avec une face de montage (102') pour le placement d'une plaque de montage (105) pour un modèle de dentition d'une mâchoire supérieure (107) et une partie inférieure d'articulateur (103) avec une face de montage (103') pour le placement d'une plaque de montage (105) pour un modèle de dentition d'une mâchoire inférieure (108), dans lequel la partie supérieure d'articulateur (102) peut être dépliée.

8. Dispositif d'articulateur (100) selon la revendication 7,
**caractérisé en ce que**
le dispositif d'articulateur (100) présente une clé de synchronisation (30) qui présente aux deux extrémités d'une structure d'appui (31) un élément de clé (32) qui correspond à une forme négative de la face de maintien (3) limitée par la paroi (5) du socle de montage (1) respectif pour la mâchoire supérieure et la mâchoire inférieure de sorte que la clé de synchronisation (30) est réalisée pour mettre à disposition dans un état d'encastrement entre deux socles de montage (1) une connexion par conjugaison de formes des deux socles (1).

9. Procédé de réglage d'un socle de montage (1) d'un dispositif d'articulateur (100) selon au moins une des revendications 7 ou 8 pour la création et le maniement de modèles de plâtre exempts de plaque de rétention, **comprenant les étapes**
- disposition des deux socles de montage (1) du dispositif d'articulateur (100) sur l'articulateur (101), positionnement ce faisant de la face de montage (2) des corps de socle de chaque socle de montage (1) sur les faces de montage (102', 103') de l'articulateur (100),
- positionnement de l'élément d'empreinte qui est présent de manière mobile dans l'évidement (12) dans la face de maintien (3) avec l'élément de soulèvement (10) qui est inséré entre la face de montage (2) et la face de maintien (3), par actionnement du dispositif d'actionnement (13) de l'élément de soulèvement (10), réalisation ce faisant d'un mouvement d'abaissement ou d'un mouvement de soulèvement de l'élément d'empreinte et réglage de l'élément de soulèvement pour un processus de plâtrage, un processus d'éjection ou un processus d'enfoncement, dans lequel l'élément d'empreinte est déplacé dans une position intermédiaire entre la première et la seconde position lors du processus de plâtrage, dans lequel l'élément d'empreinte est déplacé dans la première position lors du processus d'éjection et dans lequel l'élément d'empreinte est déplacé dans la seconde position lors du processus d'enfoncement.

10. Procédé selon la revendication 9, dans lequel le dispositif d'articulateur (101) est réglé pour un processus de plâtrage et l'élément d'empreinte dépasse partiellement de la face,
**comprenant les étapes**
- ouverture de l'articulateur (101) par dépliage de la partie supérieure d'articulateur (102),
- mise à disposition d'un modèle de dentition de mâchoire supérieure et de mâchoire inférieure et mise à disposition de plâtre,
- disposition du modèle de dentition de la mâchoire supérieure (107) sur un élément de support séparé dans l'orientation avec le côté des dents vers le bas,
- application du plâtre sur le côté du modèle de dentition de la mâchoire supérieure (107) détourné des dents,
- pose d'un corps ferromagnétique sur l'élément de maintien (6) du socle de montage (1),
- pose de la partie supérieure d'articulateur (102) avec le socle de montage (1) disposé, dans lequel la face de montage (2) du socle de montage (1) est pressée sur le plâtre et le plâtre remplit la paroi du socle de montage (1), dans lequel le corps ferromagnétique est entouré du plâtre,
- séchage et durcissement du plâtre,
- retrait de l'élément de support sur lequel le modèle de dentition de la mâchoire supérieure (107) est positionné,
- rotation et dépose de l'articulateur (101) sur la partie supérieure d'articulateur (102),
- ouverture de l'articulateur (101) par dépliage de la partie inférieure d'articulateur (103),
- disposition du modèle de dentition de la mâchoire inférieure (108) sur le modèle de dentition de la mâchoire supérieure (107) avec le côté des dents vers le bas, dans lequel une plaque est incorporée entre les modèles pour le respect d'un écart entre les deux modèles de dentition (107, 108),
- application du plâtre sur le côté du modèle de dentition de la mâchoire inférieure (108) détourné des dents,
- pose d'un corps ferromagnétique sur l'élément de maintien (6) du socle de montage (1),
- pose de la partie inférieure d'articulateur (103) avec le socle de montage (1) disposé, dans lequel la face de montage (2) du socle de montage (1) est pressée sur le plâtre et le plâtre remplit la paroi du socle de montage (1), dans lequel le corps ferromagnétique est entouré du plâtre,
- séchage et durcissement du plâtre,
- rotation et dépose de l'articulateur (101) sur la partie inférieure d'articulateur (103).

11. Procédé selon la revendication 9, dans lequel le dispositif d'articulateur (101) est réglé pour un processus d'enfoncement et les éléments d'empreinte sont détachés des modèles de dentition de la mâchoire supérieure (107) et de la mâchoire inférieure (108).

12. Procédé selon la revendication 9, dans lequel le dispositif d'articulateur (101) est réglé pour un processus d'éjection et les modèles de dentition de la mâchoire supérieure (107) et de la mâchoire inférieure (108) sont retirés.

13. Procédé de repositionnement de modèles de dentition (107, 108) dans un dispositif d'articulateur (100) selon la revendication 8 par orientation des socles de montage (1) l'un par rapport à l'autre dans un articulateur quelconque (101), dans lequel cet articulateur (101) peut être l'articulateur (101) provenant du procédé selon une des revendications 9 à 12 ou un autre articulateur (101) du même type, et positionnement de la face de montage (2) des corps de socle de chaque socle de montage (1) sur les faces de montage (102', 103') de l'articulateur (100),
**comprenant les étapes**
- fixation d'un socle de montage (1) inférieur dans l'articulateur (101),
- pose de la clé de synchronisation (30) avec son premier élément de clé (32) sur la face de maintien (3) du socle de montage (1) inférieur,
- pose d'un second socle de montage (1) supérieur sur l'élément de clé (32) orienté vers le haut de la clé de synchronisation (30),
- coulissement du coulisseau (20) dans l'évidement (21) de la face de montage (2) sur le socle de montage (1) supérieur de sorte que le dispositif de fixation (104) de l'articulateur (101) peut être vissé dans l'alésage fileté du coulisseau (20),
- fixation du socle de montage (1) supérieur sur l'articulateur (101) avec le dispositif de fixation (104) lorsque les éléments de clé (32) de la clé de synchronisation (30) reposent sur les faces de maintien (3) des deux socles de montage (1),
- retrait de la clé de synchronisation (30).
